# FASCICULE DE BREVET EUROPEEN

(11) **EP 4 095 403 B1**
(45) Date de publication et mention de la délivrance du brevet: **29.05.2024**
(21) Numéro de dépôt: 22174771.0
(22) Date de dépôt: 23.05.2022
(51) Int. Cl.: F16C 3/14, F16C 3/20

(54) **VILEBREQUIN ANTI-BARBOTAGE**
ANTI-SPLASH-KURBELWELLE
ANTI-SPLASH CRANKSHAFT

(30) Priorité: 26.05.2021 FR 2105444
(43) Date de publication de la demande: 30.11.2022
(73) Titulaire: NEW H POWERTRAIN HOLDING, S.L.U., 47008 Valladolid (ES)
(72) Inventeur: CARBON, ALAIN, 78084 GUYANCOURT (FR); FRADET, VALENTIN, 78084 GUYANCOURT (FR)
(74) Mandataire: Renault Group

(56) Documents cités:
- CN-U- 205 715 231
- FR-A1- 3 047 052
- GB-A- 2 566 709

## Description

### Domaine technique de l'invention

La présente invention concerne un vilebrequin de moteur thermique.

La présente invention concerne particulièrement un vilebrequin conformé pour diminuer les frottements entre le vilebrequin et une nappe d'huile dans laquelle est plongé le vilebrequin.

La présente invention concerne également un moteur à combustion interne de véhicule automobile.

### Etat de la technique

Les moteurs à combustion interne ou thermiques de véhicules automobiles comportent un vilebrequin maintenu mobile en rotation dans un carter du moteur par des paliers, lesdits paliers entourent une partie du vilebrequin sensiblement dans l'axe du vilebrequin et connue sous le nom de tourillon. Entre deux paliers se trouvent des bras ou manivelles dont une première extrémité est équipée de maneton excentré sur lequel est montée une bielle. Ledit vilebrequin est mis en mouvement en rotation autour de son axe longitudinal sensiblement parallèle à l'axe du moteur par lesdites bielles qui comportent chacune une tête de bielle à une première extrémité basse et entourant le maneton, et une extrémité haute opposée solidaire d'un piston. Ledit piston est apte à coulisser dans un cylindre selon un mouvement de va-et-vient pour entrainer le vilebrequin en rotation autour de son axe longitudinal.

Les manivelles peuvent être munies de masses d'équilibrages appelées contre-poids. Ces masses permettent l'équilibrage dynamique du vilebrequin. Les contrepoids sont disposés dans le prolongement de la manivelle de façon diamétralement opposée à la première extrémité équipée de maneton. Les contrepoids génèrent donc un couple résistant pour réduire les vibrations dues au mouvement alternatif des pistons et à la dissymétrie éventuelle du système de manivelle.

Afin de réduire les masses du moteur et notamment les masses en mouvement dont celle des contrepoids, lesdits contrepoids sont disposés de manière générale à une distance importante de l'axe de rotation longitudinal et trempent dans la nappe d'huile contenue dans un carter d'huile agencé en dessous du vilebrequin.

Les mouvements de rotation du vilebrequin autour de son axe longitudinal entrainent alors une plongée des contrepoids dans la nappe d'huile, ce qui provoque des phénomènes d'émulsion pouvant perturber la pression interne du moteur ainsi que la décantation des vapeurs d'huile et atténuer l'effet de lubrification et de refroidissement.

Il est connu pour diminuer les frottements d'un corps en mouvement dans une nappe de liquide de diminuer le coefficient de frottement de la surface de contact dudit corps, par exemple avec un état de surface présentant une rugosité très faible.

Il est aussi connu pour d'autres éléments du moteur d'utiliser un revêtement destiné à réduire lesdits frottements.

La publication FR 2906564-A1 divulgue ainsi un accessoire d'un moteur qui est un filtre à huile comprenant des fibres traitées oléophobes.

La publication FR2906564 -A1 divulgue un décanteur d'huile comportant des médias poreux traités oléophobes.

Ces documents ne divulguent pas des contrepoids de vilebrequin aptes à réduire les problèmes d'émulsion à la plongée desdits contrepoids dans une nappe d'huile ni à diminuer les frottements de la surface de contact desdits contrepoids dans un déplacement dans ladite nappe d'huile.

Le document FR3047052-A1 propose un vilebrequin comportant des contrepoids recouverts d'un revêtement oléophobe. Les contrepoids plongent dans l'huile et le revêtement réduit alors les frottements entre les contrepoids et la nappe d'huile. Le document GB2566709-A propose un vilebrequin avec des contrepoids recouverts en partie d'une enveloppe surmoulée suivant le préambule de la revendication 1.

Aucun document ne propose de réduire les problèmes de barbotage lors des entrées des contrepoids dans la nappe d'huile. En effet, les contrepoids du vilebrequin percutent le volume d'huile et créé de l'émulsion ce qui perturbe la pression interne du moteur ainsi que la décantation et atténue l'effet de lubrification et de refroidissement.

Cela engendre également un couple résistif et a donc des conséquences directement sur le rendement et la puissance moteur.

### Bref résumé de l'invention

Le but de l'invention est de réduire les cisaillements de la nappe d'huile dans les balayages des contrepoids dans ladite nappe, notamment les chocs produits lors de l'entrée desdits contrepoids dans la nappe d'huile, à moindre coût.

Le but de l'invention est de remédier à ces problèmes et l'objet de l'invention est un vilebrequin d'un moteur thermique de véhicule automobile comportant au moins un tourillon et un maneton séparé par un bras de manivelle, un système de contrepoids plongé partiellement dans une nappe d'huile contenue en partie inférieure du moteur, le système de contrepoids étant de révolution autour de l'axe de rotation du vilebrequin et comprenant une enveloppe recouvrant un bras de manivelle tenant une masse d'équilibrage, l'enveloppe étant composée de deux demi-coquilles semi-cylindriques.

Selon l'invention, le vilebrequin comporte un système de contrepoids qui plonge dans une nappe d'huile disposée en partie inférieure du moteur thermique, ledit système présentant une forme de révolution autour de l'axe de rotation du vilebrequin afin de réduire les chocs voire de les supprimer à l'entrée du système de contrepoids dans la nappe d'huile. En effet, ayant une forme de révolution autour de l'axe de rotation ledit système ne présente pas de discontinuité géométrique pouvant provoquer des chocs avec la nappe d'huile dans laquelle il est en partie plongé.

Selon l'invention :
- le système de contrepoids comprenant une enveloppe composée de deux demi-coquilles semi-cylindriques, le système de contrepoids cylindrique ne présente ainsi pas de discontinuité géométrique pouvant générer des chocs avec la nappe d'huile lors de la rotation du vilebrequin.
   - le système de contrepoids comprenant une enveloppe recouvrant une manivelle tenant une masse d'équilibrage et ladite manivelle avec la masse d'équilibrage étant dimensionnées au préalable, on n'a pas besoin de refaire une validation de l'ensemble.
   - l'enveloppe étant composée de deux demi-coquilles semi-cylindriques, la mise en place de l'enveloppe autour de la manivelle tenant la masse d'équilibrage est facilitée.

Selon d'autres caractéristiques de l'invention :
- chaque portion angulaire est fixée solidaire à la manivelle et/ou la masse d'équilibrage De manière avantageuse, chacune des deux portions angulaires est fixée à la manivelle et/ou à la masse d'équilibrage par vissage ou par exemple par clipsage ; ce qui est une opération aisée.
   - l'enveloppe est en matière plastique ou alliage métallique.

De manière avantageuse, l'enveloppe est en matière plastique ou en alliage métallique et est donc légère et n'impacte pas sur le poids du moteur. -le système de contrepoids est recouvert de revêtement oléophobe.

De manière avantageuse, on peut recouvrir la surface périphérique du système de contrepoids c'est-à-dire de l'enveloppe avec éventuellement la manivelle et la masse d'équilibrage d'un revêtement oléophobe afin de réduire les cisaillements de la nappe d'huile dans les balayages des contrepoids dans la nappe d'huile.

### Brève description des figures

D'autres caractéristiques et avantages de l'invention apparaîtront à la lecture de la description qui suit de modes particuliers de réalisation de l'invention donnés à titre d'exemples non limitatifs et représentés sur les dessins annexés, dans lesquels :
[Fig. 1] représente un vilebrequin de moteur thermique.
[Fig. 2] représente un vilebrequin avec un système de contrepoids selon l'invention.
[Fig. 3] représente une enveloppe du système de contrepoids.
[Fig. 4] est une vue schématique de l'enveloppe du système de contrepoids.

### Description détaillée des figures

Dans la description qui va suivre, des chiffres de référence identiques désignent des pièces identiques ou ayant des fonctions similaires.

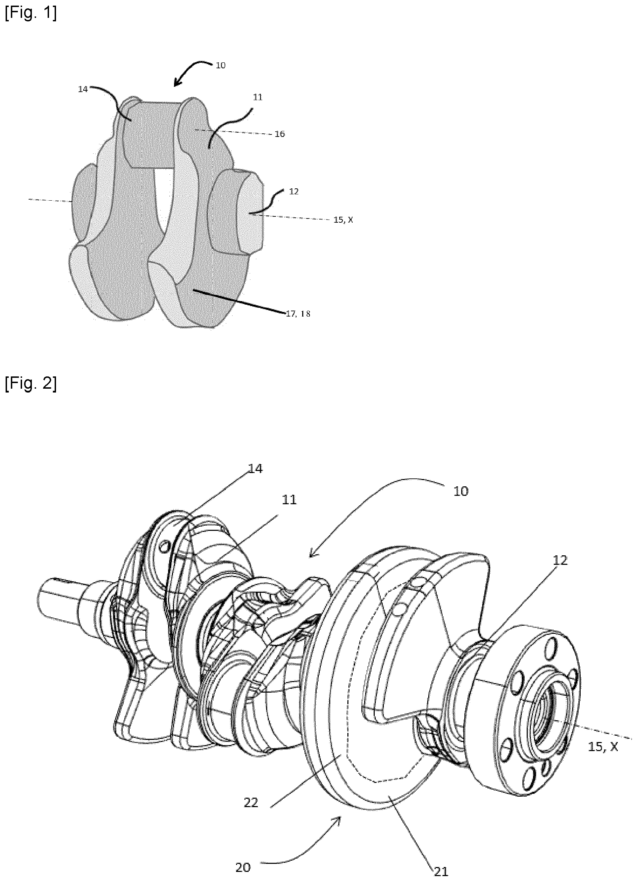

Selon la figure 1, un vilebrequin 10 de moteur à combustion interne de véhicule automobile comprend un bras de manivelle 11 agencé entre un tourillon 12 et un maneton 14. Le vilebrequin comprend généralement plusieurs tourillons alignés guidant l'axe central du vilebrequin en rotation par l'intermédiaire de paliers. Entre ces paliers se trouvent des bras de manivelle 11 qui tiennent des manetons excentrés sur lesquels sont montées des bielles (non représentées) dont l'extrémité opposé est connectée à un piston coulissant dans un mouvement de va-et-vient dans un cylindre. L'axe du tourillon 15 est confondu avec l'axe du vilebrequin X tandis que l'axe du maneton 16 est parallèle à l'axe du vilebrequin et excentré pour entrainer en rotation le vilebrequin.

Les bras de manivelle tiennent à une première extrémité un maneton et sont munis généralement de masses d'équilibrages appelées contrepoids 17 à l'extrémité opposée. Ces contrepoids permettent l'équilibrage dynamique du vilebrequin. Leur but est de réduire les vibrations dues au mouvement alternatif des pistons et à la dissymétrie éventuelle des bras de manivelle. L'équilibrage du vilebrequin est nécessaire pour réduire les vibrations du moteur causées par les forces et moments produits par la pression des gaz dans les cylindres et par les pièces en mouvement alternatif et de rotation, et pour diminuer les charges exercées sur les coussinets de la ligne d'arbre.

Les forces provoquées par les pièces en mouvement liées au vilebrequin génèrent des vibrations et Il est cependant impossible d'obtenir un équilibrage parfait. Les contrepoids permettent alors de réduire voire annuler lesdites vibrations.

Le contrepoids est de forme sensiblement en quartier de cylindre présentant un rayon sensiblement important pour faciliter le balourd tout en minimisant la masse. Dans le mouvement de rotation du vilebrequin, le contrepoids 17 est plongé dans une nappe d'huile disposée dans carter (non représenté) dans le bas moteur. La plongée dudit contrepoids dans la nappe d'huile génère des projections d'huile et des émulsions qui peuvent perturber la pression interne du moteur ainsi que la décantation des vapeurs d'huile et donc atténuer l'effet de lubrification et de refroidissement.

Le balayage du contrepoids dans la nappe d'huile peut aussi être gêné par des frottements de la masse d'acier du contrepoids dans le fluide, ce qui a pour conséquence de réduire le rendement du moteur. Pour réduire lesdits chocs et les frottements du contrepoids dans la plongée et son déplacement dans la nappe d'huile et également le cisaillement de ladite nappe d'huile,

Des solutions sont connues pour éviter la plongée du contrepoids et son déplacement dans la nappe d'huile :
- en diminuant le rayon dudit contrepoids, ce qui entraine alors un déséquilibre du vilebrequin et génère un problème de bruit et de vibrations du groupe moto-propulseur pouvant affecter la qualité sonore audible dans le véhicule ou de NVH pour « Noise Vibration Harshness » en anglais, ou de fiabilité de coussinets de ligne.
- en abaissant le niveau maximum de la nappe d'huile, cependant ce niveau répond à deux contraintes importantes de structure et de fonctionnement. En effet, de façon structurelle, il n'est pas possible d'abaisser le niveau maxi de la nappe d'huile car le fond du carter d'huile est bien déterminé en fonction de la hauteur entre le moteur et la chaussée ou le trottoir. De façon fonctionnelle, afin d'augmenter les intervalles de vidange, il convient de maintenir un volume d'huile suffisant.

On peut également améliorer l'état de surface du contrepoids par exemple par polissage, ce qui augmente sensiblement le coût de fabrication du vilebrequin.

Pour pallier lesdits problèmes de plongée et de frottements générés tout en respectant les contraintes de définition du vilebrequin et du moteur, l'invention propose un vilebrequin 10 de moteur thermique de véhicule automobile qui comprend un système de contrepoids mobile 20 en rotation autour de l'axe du vilebrequin, qui présente une partie périphérique 21 plongée en permanence dans la nappe d'huile comme représenté en figure 2.

Ainsi les chocs lors de la plongée du système de contrepoids dans la nappe sont inexistants ce qui supprime les phénomènes de projection et d'émulsion d'huile décrits ci-avant néfastes au bon fonctionnement du moteur.

Selon la figure 2, le système de contrepoids est sensiblement de révolution autour de son axe 15 confondu avec l'axe X du vilebrequin et ledit système présente sa partie périphérique 21 en permanence plongée dans la nappe d'huile. Ainsi la rotation du système de contrepoids ne génère pas de chocs avec la nappe d'huile avec des projections et émulsions d'huile.

Le système de contrepoids 20 est cylindrique, pour procurer un encombrement minimal du vilebrequin. Il ne présente donc pas de discontinuité géométrique pouvant générer des chocs avec la nappe d'huile lors de la rotation du vilebrequin.

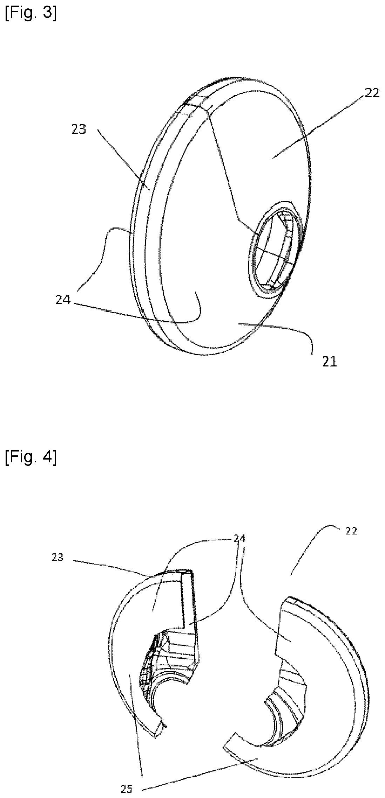

Selon un mode de réalisation de l'invention présenté en figures 2, 3 et 4, le système de contrepoids comprend une enveloppe 22 recouvrant une masse d'équilibrage tenue à une extrémité d'une manivelle du vilebrequin. Ladite enveloppe recouvre de manière préférentielle une grande partie de la masse d'équilibrage, notamment en périphérie radiale de ladite masse susceptible de venir en contact avec la nappe d'huile c'est-à-dire la partie périphérique de ladite masse qui peut être recouverte par la nappe d'huile. L'enveloppe 22 recouvre la manivelle 11 tenant la masse d'équilibrage 18.

L'enveloppe est cylindrique 22 et comprend une paroi périphérique cylindrique 23 délimitée axialement par deux parois radiales 24. L'enveloppe est donc rapportée sur la manivelle 11 et la masse d'équilibrage 18.

Selon l'invention, pour faciliter le montage de l'enveloppe autour de ladite masse 18, l'enveloppe est composée de deux demi-coquilles semi-cylindriques 25.

Les deux demi-coquilles 25 sont conformées pour s'emboiter l'une dans l'autre ou chacune dans la manivelle 11 et/ou dans la masse d'équilibrage 18.

La fixation peut être réalisée par un vissage ou un soudage ou clipsage.

De manière préférentielle, la surface de la partie périphérique de l'enveloppe susceptible de plonger en contact avec la nappe d'huile est recouverte de revêtement oléophobe pour réduire le coefficient de frottement de la surface de contact de l'enveloppe avec l'huile et donc les frottements de l'enveloppe en mouvement dans la nappe d'huile. La paroi cylindrique 23 ainsi qu'une portion périphérique des parois radiales 24 sont donc recouvertes de revêtement oléophobe.

De manière préférentielle, l'enveloppe 22 est en plastique ou en alliage léger pour engendrer un moindre couple supplémentaire en rotation.

L'objectif est atteint : l'enveloppe cylindrique recouvre la masse d'équilibrage tenue à l'extrémité d'une manivelle d'un vilebrequin et ne présente donc pas de discontinuité géométrique susceptible de générer des chocs au contact avec la nappe d'huile, pour supprimer les projections et émulsions d'huile.

Comme il va de soi, l'invention ne se limite pas aux seules formes d'exécution de cette prise, décrites ci-dessus à titre d'exemples, elle en embrasse au contraire toutes les variantes dans les limites de la portée des revendications ci-jointes.

## Revendications

1. Vilebrequin (10) d'un moteur thermique de véhicule automobile comportant au moins un tourillon (12) et un maneton (14) séparé par un bras de manivelle (11), un système de contrepoids (20) plongé partiellement dans une nappe d'huile contenue en partie inférieure du moteur, le système de contrepoids (20) étant de révolution autour de l'axe (X) de rotation du vilebrequin et comprenant une enveloppe (22) recouvrant un bras de manivelle (11) tenant une masse d'équilibrage (18), **caractérisé en ce que** l'enveloppe (22) est composée de deux demi-coquilles semi-cylindriques (25).

2. Vilebrequin (10) d'un moteur thermique selon la revendication 1 ou 2, **caractérisé en ce que** l'enveloppe comprend une paroi périphérique cylindrique (23) prolongée par deux parois radiales (24).

3. Vilebrequin (10) d'un moteur thermique selon la revendication 1 ou 2, **caractérisé en ce que** chaque portion angulaire (25) est fixée solidaire au bras de manivelle (11) et/ou la masse d'équilibrage (18).

4. Vilebrequin (10) d'un moteur thermique selon la revendication 3, **caractérisé en ce que** l'enveloppe (22) est en matière plastique ou alliage métallique.

5. Vilebrequin (10) d'un moteur thermique selon l'une quelconque des revendications 1 à 4, **caractérisé en ce que** le système de contrepoids (20) est
recouvert au-moins en partie périphérique de revêtement oléophobe.

## Patentansprüche

1. Kurbelwelle (10) eines Verbrennungsmotors eines Kraftfahrzeugs mit mindestens einem Zapfen (12) und einem Kurbelzapfen (14), die durch einen Kurbelarm (11) getrennt sind, einem Gegengewichtssystem (20), das teilweise in eine Ölschicht eingetaucht ist, die im unteren Teil des Motors enthalten ist, wobei das Gegengewichtssystem (20) um die Drehachse (X) der Kurbelwelle drehbar ist und ein Gehäuse (22) umfasst, das einen Kurbelarm (11) abdeckt, der eine Ausgleichsmasse (18) hält, **dadurch gekennzeichnet, dass** das Gehäuse (22) aus zwei halbzylindrischen Halbschalen (25) zusammengesetzt ist.

2. Kurbelwelle (10) eines Verbrennungsmotors nach Anspruch 1 oder 2, **dadurch gekennzeichnet, dass** das Gehäuse eine zylindrische Umfangswand (23) umfasst, die durch zwei radiale Wände (24) verlängert ist.

3. Kurbelwelle (10) eines Verbrennungsmotors nach Anspruch 1 oder 2, **dadurch gekennzeichnet, dass** jeder Winkelabschnitt (25) fest an dem Kurbelarm (11) und/oder der Ausgleichsmasse (18) befestigt ist.

4. Kurbelwelle (10) eines Verbrennungsmotors nach Anspruch 3, **dadurch gekennzeichnet, dass** das Gehäuse (22) aus Kunststoff oder einer Metalllegierung besteht.

5. Kurbelwelle (10) eines Verbrennungsmotors nach einem der Ansprüche 1 bis 4, **dadurch gekennzeichnet, dass** das Gegengewichtssystem (20) mindestens im Umfangsbereich mit einer ölabweisenden Beschichtung überzogen ist.

## Claims

1. A crankshaft (10) for an internal combustion engine of a motor vehicle, comprising at least one journal (12) and a crankpin (14) separated by a crank arm (11), a counterweight system (20) partially immersed in an oil film contained in the lower part of the engine, the counterweight system (20) being of revolution about the axis (X) of rotation of the crankshaft and comprising a casing (22) covering a crank arm (11) holding a balancing mass (18), **characterized in that** the casing (22) is composed of two semi-cylindrical half-shells (25).

2. The crankshaft (10) for an internal combustion engine according to claim 1 or 2, **characterized in that** the casing comprises a cylindrical peripheral wall (23) extended by two radial walls (24).

3. The crankshaft (10) for an internal combustion engine according to claim 1 or 2, **characterized in that** each angular portion (25) is fixedly secured to the crank arm (11) and/or the balancing mass (18).

4. The crankshaft (10) for an internal combustion engine according to claim 3, **characterized in that** the casing (22) is made of plastic or metal alloy.

5. The crankshaft (10) for an internal combustion engine according to any one of claims 1 to 4, **characterized in that** the counterweight system (20) is covered at least in the peripheral part with an oleophobic coating.
